# EUROPÄISCHE PATENTSCHRIFT

(11) **EP 1 495 240 B1**
(45) Veröffentlichungstag und Bekanntmachung des Hinweises auf die Patenterteilung: **06.06.2012**
(21) Anmeldenummer: 03709746.6
(22) Anmeldetag: 05.03.2003
(51) Int. Cl.: F16H 7/12

(54) **SPANNVORRICHTUNG**
CLAMPING DEVICE
DISPOSITIF TENDEUR

(30) Priorität: 18.04.2002 DE 10217396
(43) Veröffentlichungstag der Anmeldung: 12.01.2005
(73) Patentinhaber: Schaeffler Technologies AG & Co. KG, 91074 Herzogenaurach (DE)
(72) Erfinder: SCHMIDT, Werner, 91074 Herzogenaurach (DE)
(86) Internationale Anmeldenummer: PCT/EP2003/002215
(87) Internationale Veröffentlichungsnummer: WO 2003/087625

(56) Entgegenhaltungen:
- DE-A- 19 540 706
- US-A- 4 698 049
- PATENT ABSTRACTS OF JAPAN vol. 1999, no. 04, 30. April 1999 (1999-04-30) -& JP 11 022794 A (NIPPON SOKEN INC), 26. Januar 1999 (1999-01-26)
- PATENT ABSTRACTS OF JAPAN vol. 2000, no. 09, 13. Oktober 2000 (2000-10-13) -& JP 2000 179634 A (BANDO CHEM IND LTD), 27. Juni 2000 (2000-06-27)
- PATENT ABSTRACTS OF JAPAN vol. 1998, no. 05, 30. April 1998 (1998-04-30) & JP 10 019096 A (BANDO CHEM IND LTD), 20. Januar 1998 (1998-01-20)

## Beschreibung

Die Erfindung bezieht sich auf eine Spannvorrichtung für ein Zugmittel, wie Riemen und Ketten, mit einem als Spannmittel, insbesondere einer drehbar gelagerten Spannrolle tragenden, gegen das Zugmittel angefederten Spannarm. Der Spannarm ist dabei über eine Nabe gegenüber einem ortsfesten Gehäuse einer Grundplatte oder einem Tragkörper über ein Gleitlager schwenkbar gelagert. Zwischen den zueinander parallel verlaufenden und zu einer Längsachse des Gehäuses konzentrisch ausgerichteten Kegelflächen der Nabe und des Gehäuses ist eine Gleitlagerung vorgesehen, die mit einer Lagerbuchse bestückt sein kann. Weiterhin ist zwischen den Bauteilen, dem Schwenkarm und des ortsfest angeordneten Gehäuses ein Federmittel so angeordnet, dass dieses das Gleitlager axial beaufschlagt, um damit eine gedämpfte Stellbewegung des Spannarms zu erzielen. Im Bereich einer Kontaktfläche, d. h. einer Lastzone des Gleitlagers, ist ein Schmierstoff eingebracht, um den Verschleiß zwischen dem drehstarren Bauteil und des dazu relativ verschwenkbaren Bauteils zu minimieren.

Derartige Spannvorrichtungen werden beispielsweise in Zugmitteltrieben einer Brennkraftmaschine eingesetzt, die zum Antrieb von unterschiedlichen Aggregaten wie, beispielsweise Wasserpumpe, Klimakompressor oder Lenkhilfspumpe vorgesehen sind. Die Spannvorrichtung soll dabei selbsttätig eine ausreichende Vorspannung des Zugmittels erzielen, und einen schlupffreien Antrieb der einzelnen Aggregate zu gewährleisten.

Die US-PS 4,698,049 zeigt eine derartige Spannvorrichtung. Das ortsfest angeordnete Gehäuse ist mit einer Kegelbohrung versehen, der eine korrespondierende kegelförmige Achse des Spannarms zugeordnet ist. Im eingebauten Zustand ist als Gleitlager zwischen den beiden Kegelflächen eine konische Gleitlagerbuchse eingesetzt. Eine an dem Gehäuse und dem Spannarm abgestützte Spreizfeder bewirkt eine kraftschlüssige Abstützung dieser Bauteile über die Gleitlagerbuchse. Die vom Zugmittel auf den Spannarm eingeleitete Kraftkomponente bewirkt einen Kantentrag der Gleitlagerbuchse. Diese Krafteinleitung führt zu einer Verkippung des Spannarms, der den Verschleiß aufgrund einer stark unterschiedlichen Flächenpressung der Gleitlagerbuchse erhöht.

Die gattungsgemäβen DE 195 40 706 A1 offenbart eine weitere Spanneinrichtung mit einem Konus-Gleitlager. Die Figur 2 dieser Offenlegungsschrift zeigt in einer Einzelteilzeichnung die kegelig gestaltete Gleitlagerbuchse, in deren Mantelflächen Schmierstofftaschen eingebracht sind. Diese gleichmäßig umfangsverteilt angeordneten Schmierstofftaschen sind ausschließlich dem kleinsten Durchmesser der kegelförmigen Gleitlagerbuchse zugeordnet. Im Betriebszustand der Spannvorrichtung führt die vom Zugmittel über den Spannarm in die Gleitlagerbuchse eingeleitete Kraft zu einem Kantentrag der Gleitlagerbuchse, wobei aufgrund der symmetrisch umverteilten Schmierstofftaschen, auch in Zonen großer Flächenpressung Schmierstofftaschen vorgesehen sind. Dadurch verringert sich der Traganteil zwischen der Gleitlagerbuchse und dem damit in Verbindung stehenden Bauteil, verbunden mit einer deutlichen Steigerung der Flächenpressung, was sich nachteilig auf die Lebensdauer der Gleitlagerbuchse auswirkt.

### Zusaenmenfassung der Erfindung

Die Nachteile der bekannten Lösungen berücksichtigend ist es Aufgabe der Erfindung, die Schmierstoffversorgung für das in einer Spannvorrichtung eingesetzte Gleitlager zu verbessern.

Zur Lösung dieser Problemstellung ist gemäß Anspruch 1 vorgesehen, in zumindest einem Bauteil im Bereich einer Kontaktfläche, einer Lastzone, des Gleitlagers zwischen einem drehstarren und einem sich dazu relativ verschwenkbaren Bauteil umfangsverteilt angeordnete Schmierstoffreservoirs anzuordnen. Dabei ist erfindungsgemäß vorgesehen, die Größe und Anordnung der Schmierstoffreservoirs in Abhängigkeit einer sich im eingebauten Zustand, dem Betriebszustand, der Spannvorrichtung einstellenden Flächenpressung auszulegen.

Die Schmierstoffreservoirs sind in der Kontaktfläche, der Lastzone des Gleitlagers jeweils gegenüberliegend, um 180° versetzt so angeordnet, dass in einer der Längsachse des Gehäuses bzw. der Spannvorrichtung verlaufenden Ebene, in Zonen großer Flächenpressung kleinflächige Schmierstoffreservoirs vorgesehen sind, denen in Zonen geringerer Flächenpressung Schmierstoffreservoirs mit einer größeren Fläche nebengeordnet sind. Bedingt durch eine Verkippung des Spannarms gegenüber dem Gehäuse sind die Schmierstoffreservoirs jeweils diagonal angeordnet. Die Erfindung ermöglicht einen verbesserten Schmierstoffeintrag in den Schmierspalt zwischen der Lagerbuchse und der zugehörigen Kontaktfläche des Spannarms oder des Gehäuses und stellt damit ein Optimum zwischen einem großen Traganteil der Lagerbuchse einerseits und der verbesserten Schmierstoffversorgung des Gleitlagers andererseits her. Gleichzeitig unterbindet die Erfindung schmierstofffreie bzw. "trockene" Bereiche in der Lastzone und vermeidet damit wirkungsvoll einen nachteiligen Stick-Slip-Effekt.

Weiterhin berücksichtigt die Maßnahme die einseitige Kraftbeaufschlagung des .Gleitlagers von Spannvorrichtungen, mit einem Spannarm und vermeidet damit unzulässige Flächenpressungen sowie eine Überschreitung des Traganteils in Zonen hoher Krafteinleitung in das Gleitlager. Die Stellbewegungen des Schwenkarms gegenüber dem ortsfesten Gehäuse erstrecken sich bei laufender Brennkraftmaschine über einen Winkel von < 120°. Die funktionsbedingte Verkippung des Schwenkarms gegenüber dem Gehäuse, verbunden mit einem erhöhten Kantentrag bezieht sich folglich auf einen begrenzten Abschnitt des Gleitlagers:

Die erfindungsgemäße Anordnung der Schmierstoffreservoirs, deren Größe und Anordnung in Abhängigkeit einer sich einstellenden Flächenpressung erfolgt, verbessert entscheidend die Lebensdauer des Gleitlagers und damit die Lebensdauer der gesamten Spannvorrichtung.

Weitere vorteilhafte Ausgestaltungen sind Gegenstand der abhängigen Ansprüche 2 bis 17.

Eine bevorzugte erfindungsgemäße Ausgestaltung der Erfindung sieht vor, eine Kontaktfläche des Gleitlagers zu beschichten. Dazu ist eine Gleitbeschichtung vorgesehen, deren Größe und Anordnung in Abhängigkeit einer sich im Betriebszustand einstellenden Flächenpressung unterscheidet. Beispielsweise eignen sich dabei unterschiedliche Beschichtungen bzw. voneinander abweichende Beschichtungsdicken. Weiterhin schließt diese Erfindung ein, in ein Bauteil Schmierstoffreservoirs bildende Ausnehmungen einzubringen und die verbleibende konische Fläche zu beschichten. Auch diese Maßnahme ermöglicht die Einflussnahme des Tragteils der im Bereich der Kontaktfläche gegeneinander abgestützten Bauteile, in Abhängigkeit der Krafteinleitung bzw. der sich einstellenden Flächenpressung. Bei einem derartigen Gleitlager kann eine ein separates Bauteil bildende Lagerbuchse entfallen, was sich vorteilhaft auf die Herstellkosten, Montage und die Lagerhaltung auswirkt.

Die Erfindung ermöglicht weiterhin Schmierstoffreservoirs so anzuordnen, dass die sich einstellende Flächenpressung über die gesamte axiale Breite des Gleitlagers konstant ist. Dazu sind die schmal ausgeführten Schmierstoffreservoirs im Bereich größter Flächenpressung tiefer in das jeweilige Bauteil eingebracht und die breiter ausgeführten Schmierstoffreservoirs entsprechend flacher. Mit dieser Maßnahme stellt sich vorteilhaft ein gleichbleibender Verschleiß der Lagerbüchse über die gesamte Breite ein, was sich vorteilhaft auf die Lebensdauer auswirkt.

Als Schmierstoffreservoir sind gemäß der Erfindung Ausnehmungen vorgesehen, die in unterschiedlichen geometrischen Formen in zumindest ein Bauteil im Bereich der Lastzone des Gleitlagers eingebracht sind. Dabei schließt die Erfindung sowohl einseitige Ausnehmungen ein als auch Schmierstoffreservoirs, die sich über die Wandstärke der Lagerbuchse erstrecken, d. h. diese durchdringen. Alternativ können erfindungsgemäß auch beide Bauteile, die unmittelbar gegeneinander abgestützt sind und die Gleitlagerung bilden mit Schmierstoffreservoirs vorgesehen werden.

Als Schmierstoffreservoir eignen sich beispielsweise in der konisch verlaufenden Lastzone des Gleitlagers umfangsverteilt angeordnete Nuten unterschiedlicher Breite. Nuten geringerer Breite sind dabei in der Lastzone größter Flächenpressung, und die breiter dimensionierten Nuten in der Lastzone geringerer Flächenpressung angeordnet.

Als weitere geeignete Schmierstoffreservoirs eignen sich konkav gestaltete Ausnehmungen, die eine golfballähnliche Oberfläche in der Lastzone bzw. der Kontaktfläche des Gleitlagers bilden. Weiterhin schließt die Erfindung als Schmierstoffreservoir eine Kontaktzone ein, deren Oberfläche Ausnehmungen in Form eines Wabenmusters aufweist. Auch dabei sind einzelne Waben abhängig von der Kraftbeaufschlagung bzw. Flächenpressung der Lastzone unterschiedlich gestaltet. Als Ausnehmungen, die zur Aufnahme eines Schmierstoffs dienen eigenen sich weiterhin Spiralnuten, die ringförmig in eine Kontaktfläche eines Bauteils im Bereich der Lastzone eingebracht sind. Auch dabei ist die Nutringbreite der jeweiligen vorherrschenden Flächenpressung angepasst.

Ein weiteres Ausführungsbeispiel sieht als Schmierstoffreservoir Ausnehmungen in Form eines Rautenmusters vor, die in ein Bauteil im Bereich der Lastzone angeordnet sind.

Unabhängig von der geometrischen Gestaltung der Schmierstoffreservoirs bietet es sich weiterhin zur Verbesserung des Schmierstoffeintrags in den Schmierspalt an, die Ausnehmungen so zu gestalten, dass sich umfangsseitig mittels eines axialen Versatzes eine unterbrechungsfreie Anordnung von Schmierstoffreservoirs einstellt.

Eine weitere erfindungsgemäße Maßnahme sieht vor, dass die einzelnen Ausnehmungen miteinander verbunden sind. Dazu eignen sich schmal dimensionierte Verbindungskanäle, welche beispielsweise spiralförmig in eine Lastzone eines Bauteils eingebracht sind.

Ein vorteilhaftes Gestaltungsmerkmal der Erfindung bezieht sich auf die Ausbildung einer Randzone des Schmiermittelreservoirs. Dieser Übergangsbereich zwischen der Ausnehmung, dem Schmierstoffreservoir, und dem Schmierspalt des Gleitlagers, der sich zwischen dem drehstarren Bauteil und dem sich dazu relativ verschwenkbaren weiteren Bauteil einstellt, ist danach mit einer umlaufenden Fase versehen. Diese konstruktive Ausbildung verbessert den Eintrag des Schmierstoffs in den Schmierspalt und optimiert damit die Schmierung. Alternativ zu einer umlaufenden Fase bietet es sich an, alle Schmierstoffreservoirs der Spannvorrichtung mit einem gerundeten Übergang zu versehen. Damit ist ein vom Schmierstoffreservoir ausgehend kontinuierlich verjüngender Übergang bis in den Schmierspalt realisierbar, der die Schmierstoffeinleitung in den Schmierspalt verbessert.

Zur Erzielung klar definierter Einbauverhältnisse schließt die Erfindung eine geschlitzte Lagerbuchse ein. Eine solche Lagerbuchse kompensiert einen fertigungsbedingten Toleranzausgleich und verbessert gleichzeitig eine optimale großflächige Abstützung, d. h. die Kontaktfläche zwischen dem drehstarren und dem sich dazu relativ verschwenkbaren Bauteil der Gleitlagerung. Vorzugsweise ist die geschlitzte Lagerbuchse in der Einbaulage lagepositioniert, wobei es sich insbesondere anbietet, die Lagerbuchse an dem Innenkonus zu positionieren, welcher mit der ortsfesten Grundplatte oder Gehäuse der Spannvorrichtung verbunden ist.

Für die Spannvorrichtung, bei der zumindest ein Bauteil der Gleitlagerung in der Lastzone beschichtet ist, eignet sich vorteilhaft eine PTFE-Beschichtung. Die Erfindung schließt ebenfalls alternative Beschichtungen ein, die hinsichtlich Reibverhalten und Verschleiß für die Gleitlagerung der Spannvorrichtung geeignet sind.

Unabhängig von der Erfindung, d. h. die Verwendung einer separaten Lagerbuchse oder einer Beschichtung ermöglichen die erfindungsgemäßen Schmierstoffreservoirs eine die Lebensdauer der Gleitlagerung verbessernde schwimmende Reibung.

Dabei stellen sich Reibungsverhältnisse ein, bei denen der Haftreibungskoeffizient und ein Gleitreibungskoeffizient zwischen der Lagerbuchse bzw. der Beschichtung und dem sich relativ dazu schwenkbaren Bauteil nahezu übereinstimmen. Diese Reibungsverhältnisse vermeiden einen nachteiligen Stick-Slip-Effekt. Die erfindungsgemäßen definierten Reibungsverhältnisse der Gleitlagerung verhindern gleichzeitig eine nachteilige Geräuschentwicklung, was sich vorteilhaft auf den Komfort auswirkt.

### Kurze Beschreibung der Zeichnungen

Nachfolgend wird die Erfindung anhand von drei Figuren näher erläutert. Es zeigen:
Figur 1 in einem Längsschnitt eine erfindungsgemäße Spannvorrichtung;
Figur 2 ein Detail der Gleitlagerung in einem vergrößerten Abschnitt, aus der die Gestaltung eines Schmierstoffreservoirs erkennbar ist;
Figur 3 eine der Figur 2 entsprechende Darstellung, bei der anstelle einer separaten Lagerbuchse ein das Gleitlager bildende Bauteil mit einer Beschichtung versehen ist.

### Detaillierte Beschreibung der Zeichnungen

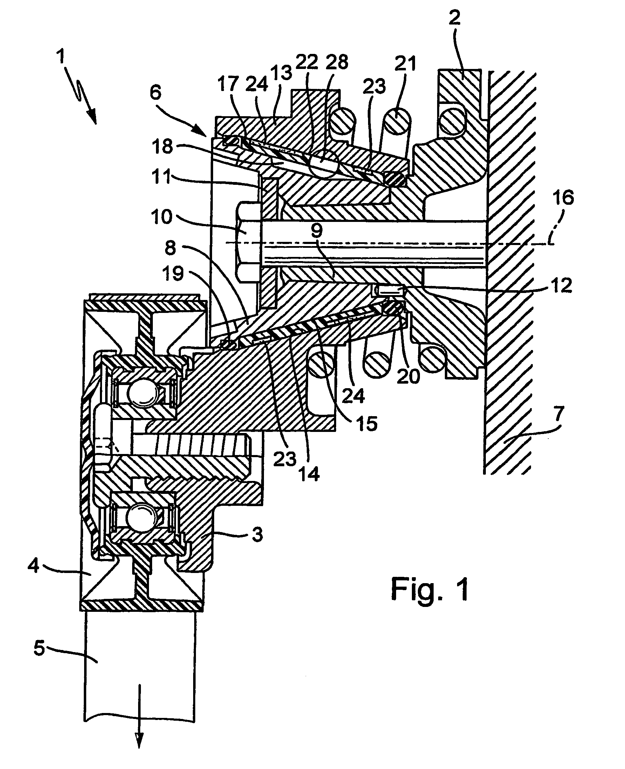

Das erfindungsgemäße Ausführungsbeispiel gemäß Figur 1 zeigt eine Spannvorrichtung 1, umfassend ein drehstarr, beispielsweise an einer Brennkraftmaschine 7 befestigtes Gehäuse 2, an dem ein Spannarm 3 drehbar angeordnet ist. Am freien Ende ist der Spannarm 3 mit einer wätzgelagerten Spannrolle 4 versehen, welche im eingebauten Zustand federnd an einem Zugmittel 5 anliegt. Der Schwenkarm 3 ist über eine Gleitlagerung 6 auf dem Gehäuse 2 drehbar gelagert. Die Gleitlagerung 6 umfasst einen Innenkonus 8, welcher auf einem zylindrischen Ansatz 9 des Gehäuses 2 positioniert ist und mittels einer Verschraubung 10 in Verbindung einer Haltescheibe 11 kraftschlüssig mit dem Gehäuse 2 verbunden ist. Als Verdrehsicherung 12 zwischen dem Innenkonus 8 und dem Gehäuse 2 dient ein beide Bauteile verbindender Stift. Der Innenkonus 8 wird umschlossen von einer Nabe 13, dessen innere konische Kontaktfläche 14 parallel zu einer weiteren konischen Kontaktfläche 15 des Innenkonus 8 verläuft, welche gleichzeitig die Mantelfläche des Innenkonus 8 bildet. Die Kontaktflächen 14, 15 sind dabei konzentrisch zu einer Längsachse 16 des Gehäuses 2 angeordnet. In einem radial von den Kontaktflächen 14, 15 begrenzten Einbauraum ist eine mit einem Längsschlitz 28 versehene Lagerbuchse 17 eingesetzt. Die über einen radial nach innen gerichteten Ansatz 18 mit dem Innenkonus 8 formschlüssig verbundenen und damit ortsfest angeordnete Lagerbuchse 17 und die Nabe 13 bilden die Gleitlagerung 6. An beiden Stirnseiten ist der Lagerbuchse 17 eine Dichtung 19, 20 zugeordnet, die einen nachteiligen Eintritt von Verunreinigungen in die Gleitlagerung 6 unterbinden. Eine zwischen dem Gehäuse 2 und der Nabe 13 des Spannarms 3 eingesetzte Torsionsfeder 21 bewirkt eine kraftschlüssige Abstützung der Nabe 13 an der Lagerbuchse 17. Neben dieser Spreizkraft übt die Torsionsfeder 21 gleichzeitig eine in Umfangsrichtung wirkende Kraftkomponente auf den Schwenkarm 3 aus, um eine kraftschlüssige Abstützung der Spannrolle 4 an dem Zugmittel 5 zu erzielen.

In einem Schmierspalt 22, welcher sich zwischen der Kontaktfläche 14 der Nabe und der Mantelfläche der Lagerbuchse 17 einstellt, sind die erfindungsgemäßen Schmierstoffreservoirs 23, 24 vorgesehen. Entsprechend einer von dem Zugmittel 5 ausgelösten über den Spannarm 3 in die Gleitlagerung 6 eingeleiteten Kraftkomponente, gekennzeichnet durch den Pfeil, kommt es zu einer einseitigen Kraftbeaufschlagung der Gleitlagerung 6, welche eine Verkippung des Spannarms 3 auslöst. Entsprechend der Krafteinleitung sind die als Ausnehmungen in der Lagerbuchse 17 ausgebildeten Schmierstoffreservoirs 23, 24 unterschiedlich gestaltet. In den Zonen größter Flächenpressung der Gleitlagerung 6 sind die schmal gestalteten Schmierstoffreservoirs 23 vorgesehen. Die breiteren Schmierstoffreservoirs 24 sind in Zonen der Gleitlagerung 6 mit einer geringeren Flächenpressung angeordnet. Gleiche Schmierstoffreservoirs sind danach wie Figur 1 zeigt, diagonal in der Gleitlagerung 6 angeordnet.

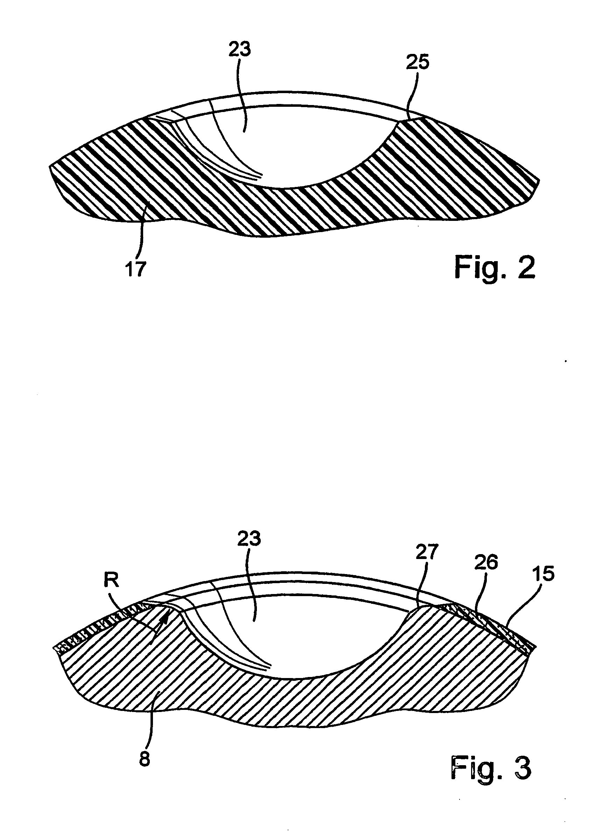

Die Figur 2 zeigt in einer vergrößerten Darstellung einen Ausschnitt der Lagerbuchse 17. Dabei ist eine Randzone 25 des Reservoirs 23 mit einer umlaufenden Fase versehen. Diese Maßnahme bewirkt einen gewünschten vereinfachten Eintritt des im Schmierstoffreservoirs 23 eingesetzten Schmierstoffs in den Schmierspalt 22 gemäß Figur 1. Ebenfalls ist das Schmierstoffreservoir 24 mit einer Fase im Bereich der Randzone 25 versehen.

Die Figur 3 zeigt in einer vergrößerten Darstellung einen Ausschnitt des Innenkonus 8, dessen Kontaktfläche 15 mit einer Gleitbeschichtung 26 versehen ist. Der Innenkonus 8 weist dabei das Schmierstoffreservoir 23 auf, wobei das Schmierstoffreservoir 23 einen durch "R" gekennzeichneten gerundeten Übergang 27 aufweist, zum vereinfachten Eintrag des Schmierstoffs in den Schmierspalt 22.

### Bezugszahlen

- 1: Spannvorrichtung
- 2: Gehäuse
- 3: Spannarm
- 4: Spannrolle
- 5: Zugmittel
- 6: Gleitlagerung
- 7: Brennkraftmaschine
- 8: Innenkonus
- 9: Ansatz
- 10: Verschraubung
- 11: Halteschraube
- 12: Verdrehsicherung
- 13: Narbe
- 14: Kontaktfläche
- 15: Kontaktfläche
- 16: Längsachse
- 17: Lagerbuchse
- 18: Ansatz
- 19: Dichtung
- 20: Dichtung
- 21: Torsionsfeder
- 22: Schmierspalt
- 23: Schmierstoffreservoir
- 24: Schmierstoffreservoir
- 25: Randzone
- 26: Gleitbeschichtung
- 27: Übergang
- 28: Längsschlitz

## Patentansprüche

1. Spannvorrichtung für ein Zugmittel, wie Riemen und Ketten, mit einem als Spannmittel, insbesondere einer drehbar gelagerten Spannrolle (4) tragenden, gegen das Zugmittel (5) angefederten Spannarm (3), der über eine Nabe (13) gegenüber einem ortsfesten Gehäuse (2) mittels einer Gleitlagerung (6) schwenkbar gelagert ist, wobei zwischen den parallel zueinander und zu einer Längsachse (16) des Gehäuses (2) konzentrisch ausgerichteten, als Kegelflächen verlaufenden Kontaktflächen (14, 15) der Nabe (13) des Spannarms (3) und des Gehäuses (2), zur Bildung eines Reibkonus, die Gleitlagerung (6) eine Lagerbuchse (17) einschließt und ein zwischen dem Gehäuse (2) und dem Spannarm (3) oder dessen Nabe (13) angeordnetes Federmittel die Gleitlagerung (6) axial beaufschlagt, und in einer Kontaktfläche (14, 15) der Gleitlagerung (6), zwischen dem drehstarren Gehäuse (2) und dem verschwenkbaren Spannarm (3), zumindest eines dieser Bauteile ein Schmierstoffreservoir aufweist, **dadurch gekennzeichnet, dass** in Abhängigkeit einer sich einstellenden Flächenpressung, die Auslegung des Schmiermittelreservoirs (23, 24) hinsichtlich der Größe und Anordnung erfolgt, wobei in einer mit der Längsachse (16) des Gehäuses (2) übereinstimmend verlaufenden Ebene in einer Zone großer Flächenpressung kleinflächige Schmiermittelreservoirs (23) und in einer Zone geringerer Flächenpressung großflächige Schmierstoffreservoirs (24) vorgesehen sind und im Betriebszustand der Spannvorrichtung (1), die um 180° versetzt gegenüberliegend angeordneten Schmierstoffreservoirs (23, 24) unterschiedlich und die diagonal zueinander angeordneten Schmierstoffreservoirs (23, 24) gleichdimensioniert sind.

2. Spannvorrichtung nach Anspruch 1, **dadurch gekennzeichnet, dass** zumindest ein Bauteil der Gleitlagerung (6) eine Gleitbeschichtung (26) aufweist.

3. Spannvorrichtung nach Anspruch 1, wobei zur Erzielung gleicher Dimensionen der Schmiermittelreservoirs (23, 24) und Erreichung einer übereinstimmenden Flächenpressung, schmale Schmierstoffreservoirs (23) tiefer und breiter gestaltete Schmierstoffreservoirs (24) flacher ausgebildet sind.

4. Spannvorrichtung nach Anspruch 1, wobei als Schmierstoffreservoir (23, 24), Ausnehmungen in unterschiedlichen geometrischen Formen in die Lastzone eines Bauteils der Gleitlagerung (6) eingebracht sind.

5. Spannvorrichtung nach Anspruch 4 , deren Ausnehmungen einseitig in ein Bauteil der Gleitlagerung (6) eingebracht sind oder die Lagerbuchse (17) durchdringen.

6. Spannvorrichtung nach zumindest einem der Ansprüche 1 bis 3, wobei die konisch verlaufende Lastzone der Gleitlagerung (6) mit symmetrisch umfangsverteilt angeordneten Nuten unterschiedlicher Breite versehen ist.

7. Spannvorrichtung nach Anspruch 4 oder Anspruch 5, bei der zumindest ein Schmierstoffreservoir (23) eine konkav gestaltete Ausnehmung bildet.

8. Spannvorrichtung nach zumindest einem der Ansprüche 4, 5 oder 7, wobei die Ausnehmungen als ein Wabenmuster gestaltet sind.

9. Spannvorrichtung nach zumindest einem der Ansprüche 4, 5, 7 oder 8 deren Schmierstoffreservoirs (23, 24) in Form von Ringspiralnuten in die Kontaktfläche (14, 15) eingebracht sind.

10. Spannvorrichtung nach zumindest einem der Ansprüche 4, 5, 7, 8 oder 9, wobei in einem Rautenmuster die Ausnehmungen an zumindest einem Bauteil der Gleitlagerung (6) angeordnet sind.

11. Spannvorrichtung nach zumindest einem der Ansprüche 4, 5, 7 bis 10, wobei die einzelnen Ausnehmungen in einer der Kontaktfläche (14, 15) über Kanäle verbunden sind, dass sich eine unterbrechungsfreie Schmierstoffreservoir-Anordnung einstellen kann.

12. Spannvorrichtung nach zumindest einem der Ansprüche 1 bis 11, wobei das Schmierstoffreservoir (23, 24) in einer Randzone (25) eine umlaufende Fase zu einem Schmierspalt (22) aufweist.

13. Spannvorrichtung nach zumindest einem der Ansprüche 1 bis 12, wobei ein Radius "R" einen gerundeten Übergang zwischen dem Schmierstoffreservoir (23) und dem Schmierspalt (22) gewährleistet.

14. Spannvorrichtung nach zumindest einem der Ansprüche 1 bis 13, wobei die Lagerbuchse (17) einen Längsschlitz (28) aufweist.

## Claims

1. Tensioning device for a traction mechanism, such as belts and chains, having, as a tensioning means, a tensioning arm (3) which in particular bears a rotatably mounted tensioning roller (4) and which is spring-loaded against the traction mechanism (5) and which, via a hub (13), is mounted by means of a plain bearing (6) so as to be pivotable with respect to a positionally fixed housing (2), wherein, between the contact surfaces (14, 15), which are parallel to one another and are aligned concentrically with respect to a longitudinal axis (16) of the housing (2) and run as conical surfaces, of the hub (13) of the tensioning arm (3) and of the housing (2), the plain bearing (6) includes a bearing bush (17) for forming a friction cone, and a spring means which is arranged between the housing (2) and the tensioning arm (3) or the hub (13) thereof subjects the plain bearing (6) to an axial load, and in a contact surface (14, 15) of the plain bearing (6), between the rotationally rigid housing (2) and the pivotable tensioning arm (3), at least one of said components has a lubricant reservoir, **characterized in that** the lubricant reservoir (23, 24) is designed in terms of size and arrangement as a function of a contact pressure which is generated, wherein, in a plane which runs congruently with the longitudinal axis (16) of the housing (2), lubricant reservoirs (23) of small area are provided in a zone of high contact pressure, and lubricant reservoirs (24) of large area are provided in a zone of relatively low contact pressure, and in the operational state of the tensioning device (1), the lubricant reservoirs (23, 24) arranged opposite one another with an offset of 180° are of different dimensions, and the lubricant reservoirs (23, 24) arranged diagonally with respect to one another are of identical dimensions.

2. Tensioning device according to Claim 1, **characterized in that** at least one component of the plain bearing (6) has a sliding coating (26).

3. Tensioning device according to Claim 1, wherein to attain identical dimensions of the lubricant reservoirs (23, 24) and to attain corresponding contact pressure, narrow lubricant reservoirs (23) are formed so as to be deeper and lubricant reservoirs (24) of wider design are formed so as to be shallower.

4. Tensioning device according to Claim 1, wherein as a lubricant reservoir (23, 24), recesses of different geometrical shapes are formed into the load zone of a component of the plain bearing (6).

5. Tensioning device according to Claim 4, the recesses of which are formed into a component of the plain bearing (6) on one side or extend through the bearing bush (17).

6. Tensioning device according to at least one of Claims 1 to 3, wherein the conically running load zone of the plain bearing (6) is provided with grooves which are arranged in a symmetrically circumferentially distributed manner and are of different widths.

7. Tensioning device according to Claim 4 or Claim 5, in which at least one lubricant reservoir (23) forms a concave recess.

8. Tensioning device according to at least one of Claims 4, 5 or 7, wherein the recesses are formed as a honeycomb pattern.

9. Tensioning device according to at least one of Claims 4, 5, 7 and 8, the lubricant reservoirs (23, 24) of which are formed in the manner of annular spiral grooves into the contact surface (14, 15).

10. Tensioning device according to at least one of Claims 4, 5, 7, 8 and 9, wherein the recesses are arranged on at least one component of the plain bearing (6) in a rhomboidal pattern.

11. Tensioning device according to at least one of Claims 4, 5, 7 to 10, wherein the individual recesses in one of the contact surfaces (14, 15) are connected via ducts such that an uninterrupted lubricant reservoir arrangement can be formed.

12. Tensioning device according to at least one of Claims 1 to 11, wherein the lubricant reservoir (23, 24) has, in an edge zone (25), an encircling bevel for forming a lubricating gap (22).

13. Tensioning device according to at least one of Claims 1 to 12, wherein a radius "R" ensures a rounded transition between the lubricant reservoir (23) and the lubricating gap (22).

14. Tensioning device according to at least one of Claims 1 to 13, wherein the bearing bush (17) has a longitudinal slot (28).

## Revendications

1. Dispositif tendeur pour un moyen de traction, comme des courroies et des chaînes, comprenant en tant que moyen tendeur un bras tendeur (3), accroché par ressort contre le moyen de traction (5) et portant en particulier un galet-tendeur (4) monté rotatif, lequel bras tendeur est monté pivotant par rapport à un boîtier fixe (2) au moyen d'un palier lisse (6) par l'intermédiaire d'un moyeu (13), le palier lisse (6) comportant une douille de palier (17) entre les surfaces de contact (14, 15) du moyeu (13) du bras tendeur (3) et du boîtier (2) qui s'étendent en tant que surfaces coniques et qui sont alignées parallèlement l'une à l'autre et de manière concentrique à un axe longitudinal (16) du boîtier (2), pour former un cône de friction, et un moyen de ressort disposé entre le boîtier (2) et le bras tendeur (3) ou son moyeu (13) sollicitant axialement le palier lisse (6), et dans une surface de contact (14, 15) du palier lisse (6), entre le boîtier (2) immobile en rotation et le bras tendeur (3) pivotant, au moins l'un de ces éléments structuraux comprenant un réservoir de lubrifiant, **caractérisé en ce que** la conception du réservoir de lubrifiant (23, 24) en ce qui concerne la taille et l'agencement s'effectue en fonction d'une pression de surface qui s'établit, et, dans un plan qui s'étend de manière à coïncider avec l'axe longitudinal (16) du boîtier (2), des réservoirs de lubrifiant (23) de petite surface sont prévus dans une zone de pression de surface élevée et des réservoirs de lubrifiant (24) de grande surface sont prévus dans une zone de plus faible pression de surface, et, dans l'état de fonctionnement du dispositif tendeur (1), les réservoirs de lubrifiant (23, 24) qui sont disposés de manière opposée et décalée de 180° sont dimensionnés de manière différente, et les réservoirs de lubrifiant (23, 24) qui sont disposés en diagonale les uns par rapport aux autres sont dimensionnés de manière identique.

2. Dispositif tendeur selon la revendication 1, **caractérisé en ce qu'**au moins un élément structural du palier lisse (6) comprend un revêtement de glissement (26).

3. Dispositif tendeur selon la revendication 1, dans lequel, pour obtenir des dimensions identiques des réservoirs de lubrifiant (23, 24) et pour atteindre une pression de surface coïncidente, les réservoirs de lubrifiant étroits (23) sont réalisés de manière plus profonde et les réservoirs de lubrifiant (24) de configuration plus large sont réalisés de manière plus plate.

4. Dispositif tendeur selon la revendication 1, dans lequel des évidements sont ménagés, en tant que réservoirs de lubrifiant (23, 24), suivant des formes géométriques différentes dans la zone de charge d'un élément structural du palier lisse (6).

5. Dispositif tendeur selon la revendication 4, dont les évidements sont ménagés d'un seul côté dans un élément structural du palier lisse (6) ou traversent la douille de palier (17).

6. Dispositif tendeur selon au moins l'une quelconque des revendications 1 à 3, dans lequel la zone de charge s'étendant de manière conique du palier lisse (6) est pourvue de rainures de largeurs différentes qui sont disposées de manière répartie symétriquement sur la périphérie.

7. Dispositif tendeur selon la revendication 4 ou 5, dans lequel au moins un réservoir de lubrifiant (23) forme un évidement de forme concave.

8. Dispositif tendeur selon au moins l'une quelconque des revendications 4, 5 ou 7, dans lequel les évidements sont configurés selon un motif en nids d'abeilles.

9. Dispositif tendeur selon au moins l'une quelconque des revendications 4, 5, 7 ou 8, dont les réservoirs de lubrifiant (23, 24) sont ménagés dans les surfaces de contact (14, 15) sous forme de rainures en spirale annulaires.

10. Dispositif tendeur selon au moins l'une quelconque des revendications 4, 5, 7, 8 ou 9, dans lequel les évidements sont disposés selon un motif en losanges sur au moins un élément structural du palier lisse (6).

11. Dispositif tendeur selon au moins l'une quelconque des revendications 4, 5 et 7 à 10, dans lequel les évidements individuels dans l'une des surfaces de contact (14, 15) sont reliés par l'intermédiaire de canaux, de telle sorte qu'un agencement de réservoirs de lubrifiant sans interruptions soit formé.

12. Dispositif tendeur selon au moins l'une quelconque des revendications 1 à 11, dans lequel le réservoir de lubrifiant (23, 24) comprend, dans une zone de bord (25), un chanfrein périphérique en direction d'un interstice de lubrification (22).

13. Dispositif tendeur selon au moins l'une quelconque des revendications 1 à 12, dans lequel un rayon « R » assure une transition arrondie entre le réservoir de lubrifiant (23) et l'interstice de lubrification (22).

14. Dispositif tendeur selon au moins l'une quelconque des revendications 1 à 13, dans lequel la douille de palier (17) comprend une fente allongée (28).
